# NEUE EUROPÄISCHE PATENTSCHRIFT

(11) **EP 1 340 442 B2**
(45) Veröffentlichungstag und Bekanntmachung des Hinweises auf die Entscheidung über den Einspruch: **29.07.2009**
(45) Hinweis auf die Patenterteilung: 23.03.2005
(21) Anmeldenummer: 03003807.9
(22) Anmeldetag: 03.07.1998
(51) Int. Cl.: A47J 31/60, B01D 24/14, C02F 1/00

(54) **Getränkeautomat mit Wasserbehälter und Filterpatrone**
Beverage dispenser with water container and filter cartridge
Distributeur de boisson avec réservoir d'eau et cartouche filtrante

(30) Priorität: 04.07.1997 DE 19728631
(43) Veröffentlichungstag der Anmeldung: 03.09.2003
(62) Teilanmeldung aus: 98941263.0
(73) Patentinhaber: Aquis Wasser-Luft-Systeme GmbH, Lindau, 9445 Rebstein (CH)
(72) Erfinder: Zucholl, Klaus E., Dr., 68199 Mannheim (DE)
(74) Vertreter: Eisele, Otten, Roth & Dobler

(56) Entgegenhaltungen:
- DE-A- 3 916 888
- DE-A- 19 641 369
- US-A- 1 579 158
- US-A- 4 147 631
- US-A- 5 024 764
- US-A- 5 114 570
- US-A- 5 431 813

## Beschreibung

Die Erfindung betrifft eine Getränkemaschine mit einem Wasserbehälter.

In Getränkeautomaten, insbesondere in Kaffee- und Teemaschinen wird häufig eine Wasseraufbereitung unter Verwendung eines Wasserfilters vorgesehen. Hierbei wird in einer Filterpatrone ein integriertes Gemisch aus Aktivkohle und Ionentauscher vorgesehen, das Geruchs- und Geschmacksstoffe, Schwermetalle, organische Verunreinigungen und Schwebstoffe (Partikel) entfernt sowie ggf. die Wasserhärte reduziert.

Die US-A-1 579 158 beschreibt einen Trinkwasserspender der einen oberhalb eines unter Atmosphärendruck stehenden Wasserbehälters angeordneten Filteraufsatz umfaßt. Über eine siphonartige Anordnung wird ein vollständiges Entleeren des Filteraufsatzes und somit ein Austrocknen des Filtermaterials vehindert.

Bekannte Getränkemaschinen benutzen hierzu auswechselbare Filterpatronen, die in den Verfahrensweg der Getränkezubereitung außerhalb des Wassertanks angeordnet sind. Eine hierfür geeignete Vorrichtung beschreibt die GB 1 159 078-B. Nachteilig bei dieser Vorrichtung ist der hohe Aufwand zum Auswechseln der Patrone, insbesondere das Lösen und Herstellen der wasserführenden Verbindung mit der Gefahr einer Leckage sowie der hohe Platzbedarf durch die Gehäuse- und Anschlußtechnik. Durch die Vielzahl von Dichtund Schraubverbindungen sowie Gehäusespalten besteht hier eine erhöhte Verkeimungsgefahr.

Daneben sind in der DE 35 22 966.7 Filterpatronen für Wasserfilterkannen beschrieben. Diese Kannen bestehen in der Regel aus einem Rohwassertank mit einer im unteren Bereich befindlichen Aufnahme für die Filterpatronen, der Filterpatrone selbst sowie dem Reinwassertank. Diese Vorrichtungen sind jedoch durch den getrennten Wasseraufbereitungsschritt unpraktisch, das Filterbett kann austrocknen und durch den Abstrombetrieb besteht die Gefahr der Bettverdichtungen und Kanalbildung im Filterbett. Die Filterpatronen sind weiterhin nicht unmittelbar im Wassertank von Getränkemaschinen einsetzbar.

Erfindungsgemäß wird eine Getränkemaschine nach Anspruch 1 so ausgebildet, daß eine zum Wasserbehälter hin offene, im Bereich des Behälterbodens angeordnete Wassereintrittsöffnung der Filterpatrone vorgesehen ist, so daß ein Durchgang für das Wasser durch die Filterpatrone im Aufstrom zu einer absteigenden Falleitung zur Führung des Wassers zu einem unten befindlichen Abfluß des Wasserbehälters vorgesehen ist, wobei Saugmittel zum Ansaugen des Wassers über den Abfluß im Behälterboden vorgesehen sind.

Hierdurch wird die Filterpatrone durch Ansaugen des Wassers in einem sogenannten Aufstromprinzip durchströmt. Dabei wird das Filtergemisch, das bevorzugt in bekannter Weise aus Aktivkohle und Ionentauscher besteht, während des Betriebs nach oben hin aufgeschwemmt, was einer Bettverdichtung des Filterbettes entgegenwirkt.

Durch die Anordnung im Innern des Behälters ist die Leckagegefahr unbedenklich, so daß mit einfachen Dichtungsmaßnahmen gearbeitet werden kann. Mit Hilfe der Falleitung, die am Boden der Filterpatrone ausmündet, kann problemlos der Anschluß zur Abflußleitung des Behälters hergestellt werden.

Die Filterpatrone umfasst einen Innenbund der Filterpatrone zur Trennung des Abflusses vom Zufluß der Filterpatrone, wobei eine Dichtung am Innenbund vorgesehen ist. Diese Dichtung wird gemäß der Erfindung als Axialdichtung ausgebildet, die den Innnenbund gegenüber dem Behälterboden dichtet.

Vorteilhafterweise wird die absteigende Falleitung innerhalb der Filterpatrone angeordnet. Somit kann der Bodenanschluß der Filterpatrone zentral erfolgen, wobei die zuflußöffnungen in die Filterpatrone an beliebiger Position weiter außen, bevorzugt ringförmig verteilt angebracht werden können.

In einer vorteilhaften Ausführungsform der Erfindung werden vom Boden des Behälters nach oben ragende Halteelemente zur Fixierung der Filterpatrone vorgesehen. Auf solchen Halteelementen ist ein Aufstecken der Filterpatrone möglich, wobei keinerlei Bodenvertiefungen vorhanden sind, in denen sich entsprechendes Stauwasser auch bei entleertem Behälter bilden kann.

An derartige Halteelemente können Fixierelemente der Filterpatrone angreifen, so daß durch Formschluß die Filterpatrone im Wasserbehälter fixiert ist. Durch die Befestigung der Filterpatrone am Boden des Wasserbehälters im unmittelbaren Bereich des Abflußanschlußes erübrigen sich andere, z. B. seitlich am Wasserbehälter angebrachte Halterungsvorrichtungen. Bei entfernter Filterpatrone ist somit der Wasserbehälter zur Reinigung oder sonstiger Handhabung frei zugänglich.

In einer vorteilhaften Ausführungsform der Erfindung weisen die Halteelemente am Boden des Wassebehälters Durchlässe auf. Dies ermöglicht ein Absaugen des Wasser auch ohne Filterpatrone, wobei durch diese Durchlässe Wasser unmittelbar in den Abfluß des Behälterbodens gelangt. Dementsprechend sollten sich die Durchlässe in den Halteelementen am Behälterboden möglichst nahe am Bodenniveau befinden, um eine möglichst vollständige Entleerung des Wasserbehälters beim Betrieb ohne Filterpatrone zu ermöglichen.

In einer Weiterbildung der Erfindung werden die Halteelemente als ringförmiger Stecksockel ausgebildet. Dieser Stecksockel kann beispielsweise in Form eines Ringstegs mit entsprechenden Bodenbohrungen oder auch in Form von ringförmig angeordneten Stiften ausgebildet sein. In diese ringförmige Anordnung wird vorzugsweise ein ebenfalls ringförmiger Innenbund der Filterpatrone eingesteckt. Mit Hilfe dieses Innenbunds der zusätzlich mit einer Dichtung versehen wird, kann somit innerhalb des Stecksockels im Filterbetrieb der für den filterfreien Betrieb gedachte Durchlaß zum Behälterabfluß geschlossen und abgedichtet werden.

Falls in einer besonderen Ausführungsform ein zusätzliches Sieb zum Zurückhalten von Partikeln, beispielsweise von Filtermaterial im Abflußbereich der Falleitung vorgesehen ist, so kann dies beispielsweise dadurch fixiert werden, daß ein entsprechender scheibenförmiger Kragen zwischen die genannte Axialdichtung und den Behälterboden hineinragt und durch das Aufstecken der Filterpatrone über den Innenbund und die Axialdichtung am Behälterboden fixiert wird.

In einer Weiterbildung der Erfindung wird zudem ein äußerer ringförmiger Außenbund an der Filterpatrone vorgesehen, der den Stecksockel außen umgreift. Hierdurch ist es möglich, daß das eigentliche Filterbett in radialer Richtung über den Stecksockel hinausragend oberhalb des Stecksockels beginnt, wobei dennoch eine tiefe Ansaughöhe des Wassers gewährleistet ist. Eine tiefe Ansaughöhe ist notwendig, um den Wasserbehälter im Filterbetrieb möglichst weitgehend zu entleeren.

Hierzu kann der Außenbund beispielsweise entsprechende bodennahe Durchlässe aufweisen oder auch in einem bestimmten Abstand zum Behälterboden enden. Im letztgenannten Fall wird entlang dem gesamten Umfang des Außenbunds ein Ansaugspalt offengelassen, durch den der Behälter im Filterbetrieb entleert wird.

Zur definierten Einstellung dieses Ansaugspaltes empfiehlt es sich dabei, einen Anschlag zur Begrenzung der Einstecktiefe der Filterpatrone auf den Stecksockel vorzusehen. Dieser Anschlag kann beispielsweise in Form eines radial vom Innenbund abstehenden Vorsprungs realisiert werden, der auf dem Stecksockel anschlägt.

Der Außenbund kann zudem mit Klemmelementen versehen werden, mittels denen er am Stecksockel verklemmt werden kann. Derartige Klemmelemente können beispielsweise in Form von Klemmrippen ausgebildet werden, so daß zwischen den Klemmrippen der Durchgang des angesaugten Wassers zum Filterbett hin gewährleistet bleibt.

Wie oben bereits angeführt, wird vorzugsweise ein Filtergemisch aus Aktivkohle und ggf. aus Ionentauscherharz verwendet. Um dieses Filtergemisch im vorgesehenen Bereich der Filterpatrone zu halten, wird vorzugsweise eine Begrenzung aus porösen Filterschichten, beispielsweise aus porösem Polyethylen vorgesehen. In Frage kämen jedoch auch andere mechanische Rückhaltesysteme, z. B. entsprechende Siebeinsätze.

In einer besonderen Weiterbildung der Erfindung wird zudem ein Längenausgleich zum Einsatz der Filterpatrone unterschiedlich hohen Wasserbehältern vorgesehen. Ein derartiger Längenausgleich kann in einer besonders einfachen Ausführungsform in Form eines Verlängerungsstabs bzw. eines verlängerungsrohrs ausgebildet werden.

Besonders vorteilhaft ist es, diesen Längenausgleich an dem Deckel der Filterpatrone zu befestigen. Somit kann bei der Fertigung einer Filterpatrone für unterschiedlich hohe Wasserbehälter die Filterpatrone stets gleich ausgebildet werden, wobei ein Deckel mit dem jeweils notwendigen Längenausgleich verwendet wird. Vorteilhafterweise wird der Deckel austauschbar ausgebildet, beispielsweise mit Hilfe von Rastverbindungen. In diesem Fall kann der Längenausgleich durch Aufdrücken des mit dem passenden Längenausgleich versehenen Deckels bei der Montage der Filterpatrone erfolgen.

In einer weiteren vorteilhaften Ausführungsform der Erfindung wird eine Vorrichtung zur Kennzeichnung des Ablaufdatums des Filters an der Filterpatrone angebracht. So kann der Filter bei der Montage bereits so gekennzeichnet werden, daß jederzeit durch Sichtkontrolle kontrollierbar ist, ob ein Filteraustausch erforderlich wird. Bevorzugt wird diese Datumseinstellung an dem Deckel so angebracht, daß durch Drehen des Deckels die Datumskennzeichnung verstellt wird. Dies ermöglicht insbesondere auch die Einstellung dieser Datumskennzeichnung durch Drehen des Deckels über den daran befestigten Längenausgleich. Insofern ist die Einstellung auch dann einfach zu handhaben, wenn der Deckel der Filterpatrone sich weit im Innern des Wasserbehälters befindet.

Auch andere Maßnahmen zur Kennzeichnung eines fälligen Filterwechsels sind bei der Erfindung möglich, beispielsweise mit Hilfe eines Wasserzählers, der den durch den Filter geflossenen Volumenstrom mißt.

In einer weiteren vorteilhaften Ausführungsform der Erfindung ist die Filterpatrone mit einer Umfangsverjüngung von oben nach unten versehen. Eine derartige Ausbildung der Filterpatrone erleichtert das Aufschwemmen des Filtergemischs, wodurch zusätzlich die Gefahr der Verdichtung des Filterbetts weiter reduziert wird.

Ein Ausführungsbeispiel der Erfindung ist in der Zeichnung dargestellt und wird anhand der Figuren nachfolgend näher erläutert.

Im einzelnen zeigen
- Fig. 1: einen schematischen Längsschnitt durch eine Filterpatrone in einem Wasserbehälter,
- Fig. 2: eine Draufsicht auf einen Gegenstand gemäß Fig. 1,
- Fig. 3: eine Ausschnittsvergrößerung aus Fig. 1 im Anschlußbereich des Behälterbodens,
- Fig. 4: einen schematischen Längsschnitt eines weiteren Ausführungsbeispiels und
- Fig. 5: eine Draufsicht auf das Ausführungsbeispiel gemäß Fig. 4.

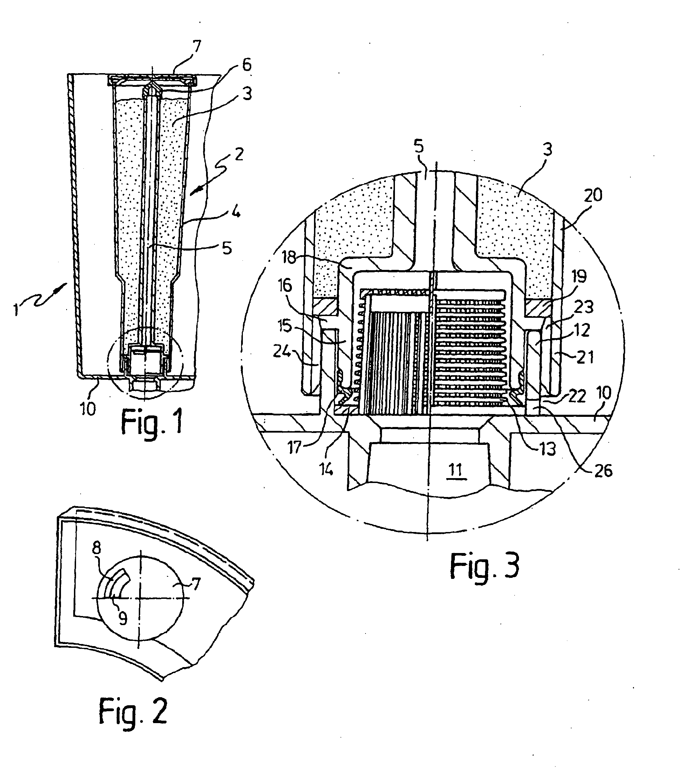

Der Wasserbehälter 1 gemäß Fig. 1 umfaßt eine Filterpatrone 2 mit einem Filtergemisch 3, beispielsweise aus Aktivkohle und Ionentauscherharz. Die Wandung 4 der Filterpatrone 2 ist von oben nach unten hin mit verjüngendem Querschnitt ausgebildet, was das Aufschwemmen des Filtergemisch 3 erleichtert. Ein Fallrohr 5 ist im Innern der Filterpatrone 2 im Wesentlichen vertikal angeordnet und mit einem Filteraufsatz 6 aus porösem Material, beispielsweise Polyäthylen, abgeschlossen. Die gesamte Filterpatrone 2 ist mit einem Deckel 7 verschlossen, der einen nicht näher erkennbaren Drehmechanismus zur Markierung eines Datums aufweist.

In Fig. 2 ist erkennbar, daß der Deckel 7 ein Fenster 8 umfaßt, durch das hindurch eine Markierungsscheibe 9 sichtbar ist. Durch Drehen des Deckels 7 läßt sich somit die im Fenster 8 sichtbare Markierung der Markierungsscheibe 9 verstellen.

Der Anschluß der Filterpatrone 2 am Behälterboden 10 ist vor allem in Fig. 3 erkennbar. Am Behälterboden 10 ist zentrisch um einen Abfluß 11 ein Stecksockel 12 angeformt. Innerhalb des Stecksockels 12 ist ein Siebeinsatz 13 mit einem Ringkragen 14 eingelegt.

Der Siebeinsatz 13 ist von einem Innenbund 15 umschlossen, der einen radial nach außen ragenden Anschlag 16 zur Begrenzung der Einstecktiefe aufweist. Am Innenbund 15 ist eine Axialdichtung 17 befestigt, d. h. vorliegend in eine entsprechende flache Ringnut eingelegt. Die Axialdichtung 17 dichtet den Innenbund 15 über den Ringkragen 14 zum Behälterboden 10 hin ab. Der Innenbund 15 geht an seiner Oberseite über eine Schulter 18 in das Fallrohr 5 über.

Oberhalb des Anschlags 16 ist ein ringförmiger Filtereinsatz 19 erkennbar, auf dem das Filtergemisch 3 aufliegt.

Die Umfangswand 20 geht in ihrer unteren Verlängerung in einen Außenbund 21 über, der aufgrund der durch den Anschlag 16 vorgegebenen Einstecktiefe einen Ansaugspalt 22 im Bereich des Behälterbodens 10 offenläßt. Der Durchmesser des Außenbunds 21 ist so bemessen, daß zwischen dem Außenbund 21 und dem radial vom Innenbund abstehenden Anschlag 16 ein Durchlaß 23 zum Filtereinsatz 19 offen bleibt.

Der Außenbund 21 ist weiterhin über Klemmrippen 24 auf dem Stecksockel 12 festgeklemmt.

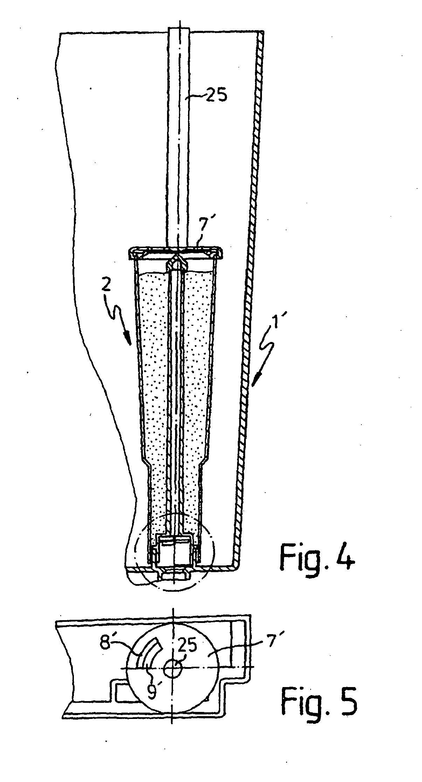

Die Darstellung gemäß den Figuren 4 und 5 entspricht im Wesentlichen dem Gegenstand der Figuren 1 und 2. Vorliegend ist jedoch ein Wasserbehälter 1' von erheblich größerer Höhe vorhanden. In den Wasserbehälter 1' wird die gleiche Filterpatrone 2 wie im vorgenannten Ausführungsbeispiel eingesetzt. Lediglich der Deckel 7' ist insofern anderweitig ausgebildet, daß er mit einer Stabverlängerung 25 versehen ist. Da die Deckel 7, 7' einfach auf die Filterpatrone mit Hilfe einer Verrastung befestigt werden, ist das Anbringen der Stabverlängerung 25 besonders einfach vorzunehmen.

Mit Hilfe der Stabverlängerung 25 läßt sich zum einen die Filterpatrone 2 problemlos von oben in den Wasserbehälter 1' einführen und auf den Stecksockel 12 aufstecken sowie zum andern gegebenenfalls über einen entsprechenden, nicht näher dargestellten, Behälterdeckel an der Oberseite zusätzlich fixieren.

Auch die Deckelmarkierung läßt sich über die Stabverlängerung 25 bequem betätigen, indem wie im vorgenannten Ausführungsbeispiel der Deckel 7' so weit gedreht wird, bis in seinem Fenster 8' die korrekte Markierung der Markierungsscheibe 9' erkennbar wird.

Die Funktionsweise der erfindungsgemäßen Vorrichtung vollzieht sich in folgender Weise.

Über den Abfluß 11 wird von dem entsprechenden Getränkeautomaten die benötigte Wassermenge angesaugt. Dies führt zu einem Wasserfluß aus dem Innern des Behälters 1 durch den Ansaugspalt 22 zwischen dem Außenbund 21 und dem Behälterboden 10. Das Wasser strömt innerhalb des Außenbunds 21 zwischen den Klemmrippen 24 nach oben zum Filtereinsatz 19 und tritt durch diesen hindurch.

Der Filtereinsatz 19 dient ebenso wie der Filteraufsatz 6, der aus dem gleichen Material bestehen kann, dazu, das Filtergemisch 3 im Innern der Filterpatrone 2 zu halten.

Das angesaugte Wasser strömt in der Folge im Aufstrom nach oben durch das Filtergemisch 3 und wird hierbei gefiltert sowie gegebenenfalls bei Vorhandensein von Ionenaustauscherharz enthärtet.

Durch den Filteraufsatz 6 gelangt das Wasser in das Fallrohr 5, über das es nach unten strömen kann, wo es nach Durchtritt durch den Siebeinsatz 13 in den Abfluß 11 gelangt und für die Getränkezubereitung zur Verfügung steht.

Damit der beschriebene Strömungsvorgang einwandfrei funktioniert, muß der Bereich innerhalb des Außenbundes, der durch den Ansaugspalt 22 mit dem Wasser des Behälters 1 in Verbindung steht, zuverlässig gegenüber dem Abfluß 11 abgedichtet sein. Dies wird vorliegend durch die Axialdichtung 17 in Verbindung mit dem Innenbund 15 erreicht.

Hier ist hinzuzufügen, daß der Stecksockel 12 wenigstens im Bereich des Behälterbodens 10 Durchlässe aufweist. Der Stecksockel 12 kann auch aus einzelnen nach oben stehenden Rippen bestehen, da der Innenabschluß über den Innenbund 15 und die Axialdichtung 17 erfolgt.

Der Stecksockel 12 muß im Bereich des Behälterbodens wasserdurchlässig sein, sofern der Wasserbehälter 1 auch ohne Filterpatrone 2 verwendet wird und eine vollständige Entleerung des Behälters 1 stattfinden soll. Bei entfernter Filterpatrone 2 fließt das Wasser des Behälterbodens unmittelbar durch die Durchlässe 26 in den Abfluß 11.

Ein Betrieb ohne Filterpatrone 2 kann sinnvoll sein, wenn diese aufgrund der Wasserqualität nicht erforderlich ist oder wenn der Betrieb bei fehlender Austauschfilterpatrone 2 nicht unterbrochen werden soll, wobei der entsprechende Getränkeautomat zeitweise ohne Wasseraufbereitung betrieben wird.

Über die Markierung 7, 8, 9 kann der fällige Austausch der Filterpatrone 2 problemlos eingestellt werden, so daß der Austausch zum entsprechenden Zeitpunkt nicht vergessen wird.

Die beschriebene Filterpatrone 2 im Wasserbehälter 1 bietet die verschiedenen, oben angeführten Vorteile. Das Filtergemisch 3 kann nicht verdichtet werden, da es durch den Aufstrom des Wassers regelmäßig aufgeschwemmt wird. Der Einsatz der Filterpatrone 2 ist durch einfaches Aufstecken auf den Stecksockel 12 ohne weitere Verbindungsanschlüsse möglich. Das Anordnen der Filterpatrone 2 im Innern des Wasserbehälters 1 macht die ganze Vorrichtung unempfindlich gegenüber etwaiger Leckage am Filteranschluß.

Durch den bodenseitigen Abfluß 11, der durch den ebenfalls bodenseitigen Anschluß der Filterpatrone 2 ermöglicht wird, ist die Umstellung auf einen filterlosen Betrieb des Getränkeautomaten besonders einfach durch einfaches Abziehen der Filterpatronen 2 möglich.
- 1: Wasserbehälter
- 2: Filterpatrone
- 3: Filtergemisch
- 4: Wandung
- 5: Fallrohr
- 6: Filteraufsatz
- 7: Deckel
- 8: Fenster
- 9: Markierungsscheibe
- 10: Behälterboden
- 11: Abfluß
- 12: Stecksockel
- 13: Siebeinsatz
- 14: Ringkragen
- 15: Innenbund
- 16: Anschlag
- 17: Axialdichtung
- 18: Schulter
- 19: Filtereinsatz
- 20: Umfangswand
- 21: Außenbund
- 22: Ansaugspalt
- 23: Durchlaß
- 24: Klemmrippen
- 25: Stabverlängerung
- 26: Durchlaß

## Patentansprüche

1. Getränkemaschine mit einem Wasserbehälter (1), der eine Filterpatrone (2) umfasst, die im Innern des Wasserbehälters (1) angeordnet ist, wobei eine zum Wasserbehälter hin offene, im Bereich des Behälterbodens (10) angeordnete Wassereintrittsöffnung (23) der Filterpatrone (2) vorgesehen ist, so dass ein Durchgang für das Wasser durch die Filterpatrone (2) im Aufstrom zu einer absteigenden Fallleitung (5) zur Führung des Wassers zu einem im Behälterboden (10) befindlichen Abfluss (11) vorgesehen ist und die Getränkemaschine Saugmittel zum Ansaugen des Wassers über den Abfluss (11) im Behälterboden (10) umfasst, wobei die Filterpatrone einen Innenbund umfasst, der mit einer als Axialdichtung ausgebildeten Dichtung versehen ist, die den Innenbund gegenüber dem Behälterboden dichtet.

2. Getränkemaschine nach Anspruch 1 **dadurch gekennzeichnet, daß** die absteigende Leitung (5) innerhalb der Filterpatrone angeordnet ist.

3. Getränkemaschine nach einem der vorgenannten Ansprüche **dadurch gekennzeichnet, daß** ein vom Boden des Behälters (1) abstehendes Halteelement (12) zur Fixierung der Filterpatrone vorgesehen ist, das Durchlässe (26) aufweist.

4. Getränkemaschine nach einem der vorgenannten Ansprüche **dadurch gekennzeichnet, daß** ein Außenbund (21) vorgesehen ist.

5. Getränkemaschine nach einem der vorgenannten Ansprüche **dadurch gekennzeichnet, daß** ein Anschlag (16) zur Begrenzung der Einstecktiefe der Filterpatrone (2) auf dem Stecksockel (12) vorgesehen ist.

6. Getränkemaschine nach einem der vorgenannten Ansprüche **dadurch gekennzeichnet, daß** Klemmelemente (24) zur Verklemmung der Filterpatrone (2) am Stecksockel (12) vorgesehen sind.

7. Getränkemaschine nach einem der vorgenannten Ansprüche **dadurch gekennzeichnet, daß** ein Längenausgleich (25) für unterschiedlich hohe Wasserbehälter (1, 1') vorgesehen ist.

8. Getränkemaschine nach einem der vorgenannten Ansprüche **dadurch gekennzeichnet, daß** der Längenausgleich (25) am Deckel (7) der Filterpatrone (2) angebracht ist.

9. Getränkemaschine nach einem der vorgenannten Ansprüche **dadurch gekennzeichnet, daß** der Deckel (7) der Filterpatrone (2) austauschbar ist.

10. Getränkemaschine nach einem der vorgenannten Ansprüche **dadurch gekennzeichnet, daß** die Filterpatrone (2) mit einer Querschnittsverjüngung von oben nach unten ausgebildet ist.

## Claims

1. Drinks machine, comprising a water vessel (1) having a filter cartridge (2) arranged inside the water vessel (1), a water inlet opening (23) in the filter cartridge (2) that is open toward the water vessel and arranged in the region of the base (10) of the vessel being provided, so that a passageway for water to flow upward through the filter cartridge (2) to a descending drop line (5) is provided to conduct the water toward a drain (11) located in the base (10) of the vessel and the drinks machine comprises suction means for suctioning the water via the drain (11) in the base (10) of the vessel, wherein the filter cartridge comprises an internal collar which is provided with a seal in the form of an axial seal, which seals the internal collar relative to the base of the vessel.

2. Drinks machine according to claim 1, **characterised in that** the descending line (5) is arranged inside the filter cartridge.

3. Drinks machine according to either of the preceding claims, **characterised in that** a retaining element (12) projecting from the base of the vessel (1) is provided for holding the filter cartridge and comprises holes (26).

4. Drinks machine according to any one of the preceding claims, **characterised in that** an external collar (21) is provided.

5. Drinks machine according to any one of the preceding claim**s, characterised in that** a stop (16) is provided for limiting the depth of penetration of the filter cartridge (2) on the plug base (12).

6. Drinks machine according to any one of the preceding claims, **characterised in that** clamping elements (24) are provided for clamping the filter cartridge (2) onto the plug base (12).

7. Drinks machine according to any one of the preceding claims, **characterised in that** length equalisation (25) is provided for water vessels (1, 1') of different heights.

8. Drinks machine according to any one of the preceding claims, **characterised in that** the length compensation (25) is mounted on the lid (7) of the filter cartridge (2).

9. Drinks machine according to any one of the preceding claims, **characterised in that** the lid (7) of the filter cartridge (2) is replaceable.

10. Drinks machine according to any one of the preceding claims, **characterised in that** the filter cartridge (2) is designed with a cross-section that tapers from top to bottom.

## Revendications

1. Distributeur de boissons, comportant un réservoir d'eau (1), qui comprend une cartouche filtrante (2), qui est placée à l'intérieur du réservoir d'eau (1), une ouverture d'entrée d'eau (23) de la cartouche filtrante (2) étant prévue dans la zone du fond de réservoir (10) et ouverte vers le réservoir d'eau, si bien qu'il est prévu un passage pour l'eau à travers la cartouche filtrante (2) selon un courant ascendant jusqu'à un conduit descendant de chute (5) pour le guidage de l'eau jusqu'à un orifice d'écoulement de sortie (11), situé dans le fond de réservoir (10), ledit distributeur de boissons comprenant des moyens d'aspiration servant à aspirer l'eau par l'intermédiaire de l'orifice d'écoulement de sortie (11) situé dans le fond de réservoir (10), dans lequel la cartouche filtrante comporte un collet intérieur qui est pourvu d'un élément d'étanchéité axial qui assure l'étanchéité entre ledit collet intérieur et le fond du réservoir.

2. Distributeur de boissons selon la revendication 1, **caractérisé en ce que** le conduit descendant (5) est disposé à l'intérieur de la cartouche filtrante.

3. Distributeur de boissons selon l'une des revendications précédentes, **caractérisé en ce qu'**il est prévu un élément de maintien (12), qui part du fond du réservoir (1) pour la fixation de la cartouche filtrante et qui présente des passages traversants (26).

4. Distributeur de boissons selon l'une des revendications précédentes, **caractérisé en ce qu'**il est prévu un collet extérieur (21).

5. Distributeur de boissons selon l'une des revendications précédentes, **caractérisé en ce qu'**il est prévu une butée (16) pour limiter la profondeur d'emmanchement de la cartouche filtrante (2) sur le socle de fixation (12).

6. Distributeur de boissons selon l'une des revendications précédentes, **caractérisé en ce qu'**il est prévu des éléments de serrage (24) pour bloquer la cartouche filtrante (2) contre le socle de fixation (12).

7. Distributeur de boissons selon l'une des revendications précédentes, **caractérisé en ce qu'**il est prévu un compensateur de longueur (25) pour des réservoirs d'eau (1, 1') de hauteurs différentes.

8. Distributeur de boissons selon l'une des revendications précédentes, **caractérisé en ce que** le compensateur de longueur (25) est monté au niveau du couvercle (7) de la cartouche filtrante (2).

9. Distributeur de boissons selon l'une des revendications précédentes, **caractérisé en ce que** le couvercle (7) de la cartouche filtrante (2) est échangeable.

10. Distributeur de boissons selon l'une des revendications précédentes, **caractérisé en ce que** la cartouche filtrante (2) est réalisée avec un amincissement de la section transversale depuis le haut vers le bas.
